Europäisches Patentamt

(19) European Patent Office

Office européen des brevets

(11) Publication number: **0 197 700**

**A1**

(12) # EUROPEAN PATENT APPLICATION

(21) Application number: **86302187.9**

(22) Date of filing: **25.03.86**

(51) Int. Cl.⁴: **G 06 F 9/44**

(30) Priority: **29.03.85 IT 6731085**

(43) Date of publication of application:
**15.10.86 Bulletin 86/42**

(84) Designated Contracting States:
**DE FR GB**

(71) Applicant: **Ing. C. Olivetti & C., S.p.a.**
**Via G. Jervis 77**
**I-10015 Ivrea (Turin)(IT)**

(72) Inventor: **Robotti, Franco**
**via De Sanctis, 72**
**I-10142 Torino (To)(IT)**

(72) Inventor: **Mosca, Ferruccio**
**via Cascinette, 77**
**I-10015 Ivrea (To)(IT)**

(74) Representative: **Pears, David Ashley et al,**
**REDDIE & GROSE 16 Theobalds Road**
**London WC1X 8PL(GB)**

(54) Electronic circuit for displaying pre-stored messages in an office machine.

(57) An electronic circuit for an office machine provided with a keyboard (14) and a display means (13) comprising a central processing unit (20) connected to the keyboard and to the display means, a first memory (26) for storing the instructions which make up the operating program for the central processing unit, and a second memory (28) for pre-storing a plurality of help messages for the operator, each of which is associated with a given phase in the operating program. A key (18) of the keyboard (14) can be actuated to select from the second memory (28) the help message associated with the phase in the operating program that the central unit (20) is executing at that time, and to cause this help message to appear on the display means (13).

FIG.2

ELECTRONIC CIRCUIT FOR DISPLAYING PRE-STORED MESSAGES IN
AN OFFICE MACHINE

The present invention concerns an electronic circuit for displaying pre-stored messages in an office machine provided with a keyboard and display means, such as a VDU screen.

The circuit comprises a central processing unit which is connected to the keyboard and to the display means, a first memory for storing the instructions which make up the operating program for the central processing unit and a second memory for storing a plurality of help messages for the operator, which, in the form of instructions for use of the machine, can appear on the display means when the operator actuates a given key of the keyboard.

Office machines are already known which are provided with electronic circuits that can cause the display means to display help messages upon request from the operator by means of actuation of a given key of the keyboard, the key normally being marked by the word HELP.

In all the known machines however, when the HELP key is actuated, it is always the first of the help messages which appears on the display means and the operator has to run through the messages on the video screen until finding that one which, among them all, can effectively help the operator in that particular operating phase in which the machine is working.

That is a serious disadvantage since it is the operator who is required on each occasion to search among the plurality of messages for that message which can help the operator in continuing with the work in question. In addition, that method involves a substantial amount of time taken by the operator to search for the correct message.

The object of the present invention is to automate the search for the help message, in such a way that, when the given key is depressed, the electronic circuit is capable of displaying on the display means only the currently appropriate help message.

Accordingly the invention is characterised in that each of the help messages stored in the second memory is associated with a given phase of the operating program stored in the first memory, and in

that the help key, when actuated, causes the central processing unit temporarily to interrupt execution of the operating program, to search in the second memory for the help message corresponding to the phase of the program which has been interrupted and to display on the display means the help message which is taken from the second memory.

The invention will now be described in more detail by way of example and with reference to the accompanying drawings in which:

Figure 1 is a diagrammatic perspective view of an office machine incorporating an electronic circuit according to the invention,

Figure 2 shows an electronic circuit embodying the present invention,

Figure 3 is a diagrammatic view showing the organisation of one of the memories of the circuit shown in Figure 2, and

Figure 4 is a flowchart of the control program of an operating phase of the circuit shown in Figure 2.

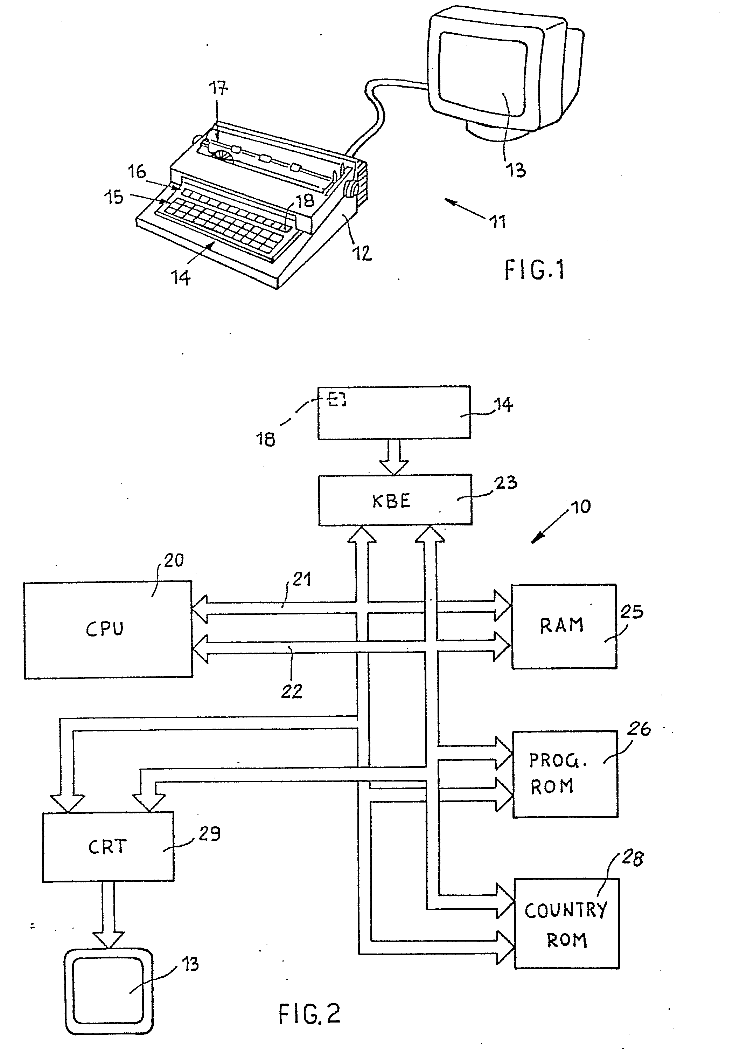

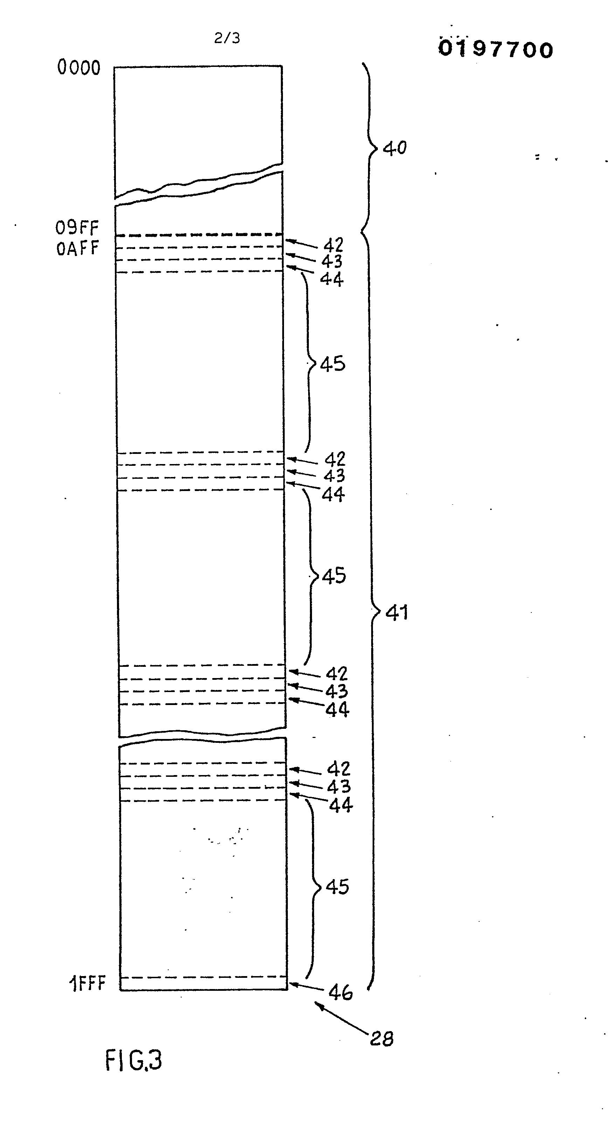

Referring to Figures 1 and 2, an electronic circuit 10 embodying the invention is shown applied to an office machine 11 comprising an electronic typewriter 12 and a display means or VDU 13 connected thereto. The typewriter 12 comprises in turn a keyboard 14 having a plurality of alpha-numeric keys 15 and a series of function keys 16, and a printer 17 of known type, for example of the type described in our published UK patent application GB 2 031 626.

Provided among the various function keys 16 is a key 18 on which is printed the word HELP and which can be actuated by the operator in order to cause a help message to be displayed automatically on the VDU 13, in a manner which will be described in greater detail hereinafter.

The circuit 10 comprises a central processing unit (CPU) 20 which is connected by way of a data bus 21 and an address bus 22 to a microprocessor (KBE) 23 which is connected to the keyboard 14 and is programmed to generate a corresponding binary code when each key 15 and 16 is depressed.

The circuit 10 (Figure 2) further comprises a random access memory (RAM) 25, a first read only memory (PROG.ROM) 26 for storing the instructions which make up the operating program for the central

0197700

processing unit 20, a second read only memory (COUNTRY ROM) 28 for storing information relating to control of the keyboard 14 and the printer 17 and in which is stored, in accordance with a characteristic aspect of the invention, a plurality of help messages for the operator.

The circuit 10 further comprises a microprocessor (CRT) 29 of known type connected to the VDU 13 to control display of symbols and characters in accordance with the information coming from the central processing unit 20.

The RAM 25, the ROMs 26 and 28 and the microprocessor 29 are connected to the central processing unit 20 by means of the data bus 21 and the address bus 22.

The second read only memory (COUNTRY ROM) 28 (see Figure 3) has a 16 kbyte capacity and is organised in such a way as to have a first area 40 with a capacity of 6 kbytes (addresses from 0000 to 09FF) intended for storage of the information for controlling the printing unit and the keyboard 14, and a second area 41 or from 4 to 10 kbytes (addresses from 0A00 to 1FFF) which is intended for the storage of 61 help messages for the operator. Each help message can be displayed on the VDU 13 and may be of greater or lesser length (from 1 to 14 lines), according to the content of the message itself. In addition each line may be formed by a variable number of characters, from 1 to 76.

Each line of each help message comprises a variable number of bytes 45 and is preceded by a preamble of 3 bytes, as indicated at 42, 43 and 44. The byte 42 always contains the code 00 and is indicative of the fact that it relates to the beginning of a line of a help message, the byte 43 contains the information relating to the number of the help message (from 1 to 61) while the byte 44 contains the information relating to the number of the line of the message (from 1 to 76). Thus for example if a preamble is 00-01-01, that means that the information contained in the successive bytes refers to the first line of the first help message stored in the COUNTRY ROM 28.

At the end of the last line of the last help message, stored, there is a byte 46 containing a given closure code for the help message area.

The various help messages are stored in the form of instructions for the operator for correct use of the machine and are associated with the various phases of the operating program that the machine can carry out.

An example of the content of some messages is now set out below:

'If you wish to alter the text use the keys CANCEL or BKSP+CANCEL to cancel, key the replacement characters and reconfirm with RETURN'.

'Key the key Y to protect the text or the key N to remove the protection. To interrupt the procedure press EXIT'.

The mode of operation of the electronic circuit 10 described hereinbefore is as follows:

It is assumed that the office machine in which the circuit according to the invention is provided is carrying out a given word processing program carried in the PROG.RO'' 26 and that, during a given phase in that program, the operator does not remember or needs to know what operation is to be carried out in order to continue with the work.

In accordance with a feature of the invention, all the operator has to do is to depress the HELP key 18 of the keyboard 14 to cause the VDU 13 to display the help message associated with the phase of the program that the central processing unit 20 is executing.

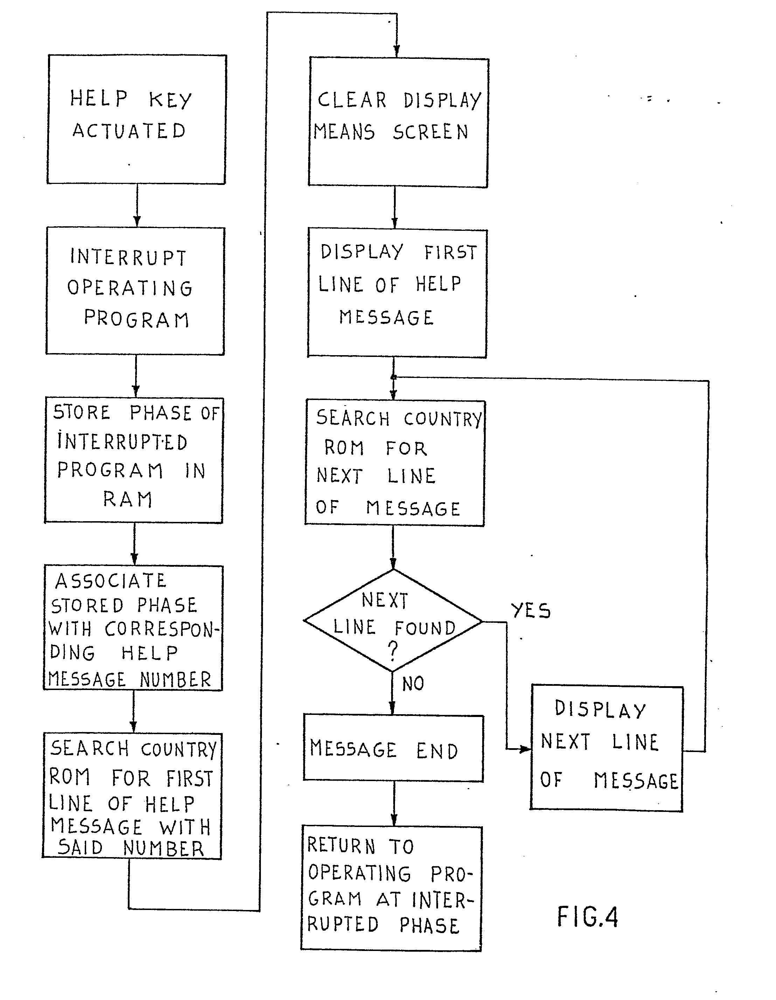

More particularly, as will be seen from the flow chart in Figure 4, when the HELP key is depressed, the central processing unit 20 temporarily interrupts the program which is being executed and stores in the RAM 25 the phase of the program which has been interrupted.

A given number of help messages being associated with each phase of the operating program, on the basis of the phase which is interrupted, the number of the help message which is to be caused to appear on the VDU 13 is sought. In particular the first line of the given number of the help message is sought in the COUNTRY ROM 28.

The central processing unit 20, by means of the microprocessor 29, then causes any display on the VDU 13 to disappear, and display of the first line of the help message.

A search is then made in the COUNTRY ROM 28 to find out if the

01977 0

help message also includes further lines. If so, the subsequent lines are displayed while if there are no further lines, the fact that the message is complete is indicated at the VDU 13 in any known fashion, for example by means of a frame around the displayed message.

Return to the phase of the program which has been temporarily interrupted may occur automatically after a given period or upon command by the operator, by way of fresh actuation of the HELP key.

It will be clear therefore that each of the help messages is associated with a given phase of the operating program stored in the PROG. ROM 26 and that depression of the HELP key of the keyboard 14 causes the central processing unit 20 temporarily to interrupt execution of the working program, to look in the COUNTRY ROM 28 for the help message corresponding to the phase of the program which has been interrupted, and to display at the VDU the help message which is taken from the COUNTRY ROM 28.

0197700

## CLAIMS

1. An electronic circuit for displaying prestored messages in an office machine provided with a keyboard (14) and a display means (13), comprising a central processing unit (20) connected to the keyboard and the display means, a first memory (26) for storing the instructions which make up the operating program for the central processing unit, a second memory (28) for storing a plurality of help messages for the operator, and a key (18) which can be actuated to call up help messages for display, characterised in that each of the help messages is associated with a given phase of the operating program which is stored in the first memory (26), the said key (18), when actuated, causing the central processing unit (20) temporarily to interrupt the execution of the operating program, to seek in the second memory (28) the help message corresponding to the phase of the program which has been interrupted, and to cause the display means (13) to display the help message taken from the second memory.

2. An electronic circuit according to claim 1, wherein the office machine comprises a print device (17), characterised in that the second memory (28) comprises a first area (40) for storing information for controlling the print device (17) and the keyboard (13) and a second area (41) for storing the help messages.

3. An electronic circuit according to claim 1 or 2, characterised in that the help messages comprise a variable number of lines and that these lines comprise a variable number of characters, each of the lines being preceded by a preamble bearing information relating to the subsequent help message.

4. An electronic circuit according to claim 3, characterised in that the preamble comprises a first byte (42) which is indicative of the beginning of a line, a second byte (43) which is indicative of the number of the message and a third byte (44) which is indicative of the number of the line.

FIG.1

FIG.2

FIG.3

```
┌──────────────┐        ┌──────────────┐
│  HELP  KEY   │        │ CLEAR DISPLAY│
│   ACTUATED   │        │ MEANS SCREEN │
└──────┬───────┘        └──────┬───────┘
       │                       │
       ▼                       ▼
┌──────────────┐        ┌──────────────┐
│  INTERRUPT   │        │ DISPLAY FIRST│
│  OPERATING   │        │ LINE OF HELP │
│   PROGRAM    │        │   MESSAGE    │
└──────┬───────┘        └──────┬───────┘
       │                       │
       ▼                       ▼
┌──────────────┐        ┌──────────────┐
│ STORE PHASE OF│       │SEARCH COUNTRY│
│ INTERRUPTED  │        │  ROM  FOR    │
│ PROGRAM  IN  │        │  NEXT  LINE  │
│    RAM       │        │  OF  MESSAGE │
└──────┬───────┘        └──────┬───────┘
       │                       │
       ▼                       ▼
┌──────────────┐           ◇ NEXT ◇
│  ASSOCIATE   │          LINE FOUND  ── YES ──┐
│ STORED PHASE │              ?                │
│ WITH CORRESPON│            │ NO              │
│ DING  HELP   │             ▼                 ▼
│MESSAGE NUMBER│        ┌──────────┐    ┌──────────────┐
└──────┬───────┘        │MESSAGE END│   │   DISPLAY    │
       │                └────┬─────┘    │  NEXT LINE   │
       ▼                     │          │ OF  MESSAGE  │
┌──────────────┐             ▼          └──────────────┘
│SEARCH COUNTRY│        ┌──────────────┐
│ ROM  FOR FIRST│       │ RETURN TO    │
│ LINE OF HELP │        │ OPERATING PRO│
│MESSAGE  WITH │        │ GRAM AT INTER│
│ SAID NUMBER  │        │ RUPTED PHASE │
└──────────────┘        └──────────────┘
```

FIG.4

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | EP-A-0 056 886 (IBM)<br>* Page 3, lines 15-17; page 4, lines 3-8, 28-30; page 5, lines 1-4; page 6, lines 1-15; page 7, lines 12-20; page 8, lines 9-18; page 13, line 16 - page 14, line 14; page 14, line 22 - page 15, line 5; page 16, lines 19-21; page 17, lines 6-15; figure * | 1,2 | G 06 F 9/44 |
| Y | | 3 | |
| A | | 4 | |
| Y | US-A-4 488 258 (STRUGER et al.)<br>* Column 2, lines 14-17; column 11, lines 48-53; column 24, line 53 - column 25, line 3; column 26, lines 1-4 * | 3 | |
| A | | 1,4 | TECHNICAL FIELDS SEARCHED (Int. Cl.4)<br><br>G 06 F 9/44<br>G 06 F 3/02<br>G 06 F 3/023 |
| Y | PATENTS ABSTRACTS OF JAPAN, vol. 9, no. 129 (P-361)[1852], 5th June 1985; & JP - A - 60 11 930 (MITSUBISHI DENKI K.K.) 22-01-1985<br>* Abstract * | 3 | |
| A | IDEM | 2,4 | |

--- -/-

The present search report has been drawn up for all claims

| Place of search<br>THE HAGUE | Date of completion of the search<br>26-06-1986 | Examiner<br>GORDON M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

## EUROPEAN SEARCH REPORT

European Patent
Office

0197700

Application number

EP 86 30 2187

| DOCUMENTS CONSIDERED TO BE RELEVANT | | | Page 2 |
|---|---|---|---|
| **Category** | **Citation of document with indication, where appropriate, of relevant passages** | **Relevant to claim** | **CLASSIFICATION OF THE APPLICATION (Int Cl.4)** |
| A | AFIPS CONFERENCE PROCEEDINGS, NATIONAL COMPUTER CONFERENCE, 4th-7th May 1981, Chicago, Illinois, pages 383-388, AFIPSS PRESS, Arlington, Virginia, US; N. RELLES et al.: "A unified approach to online assistance" * Page 384, lines 31-32 * | 1 | |
| | ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 26-06-1986 | GORDON M. |